(19) **Europäisches Patentamt / European Patent Office / Office européen des brevets**

(11) **EP 1 723 188 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **05707537.6**

(22) Anmeldetag: **19.02.2005**

(51) Int Cl.:
*C08G 18/48* (2006.01)  *C08G 18/10* (2006.01)

(86) Internationale Anmeldenummer:
**PCT/EP2005/001756**

(87) Internationale Veröffentlichungsnummer:
**WO 2005/082968 (09.09.2005 Gazette 2005/36)**

(54) **QUELLBESTÄNDIGE POLYURETHANINTEGRALSCHAUMSTOFFE**

SWELL-RESISTANT POLYURETHANE INTEGRAL FOAMS

MOUSSES INTEGRALES DE POLYURETHANNE RESISTANTES AU GONFLEMENT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.02.2004 DE 102004009939**

(43) Veröffentlichungstag der Anmeldung:
**22.11.2006 Patentblatt 2006/47**

(73) Patentinhaber: **BASF Aktiengesellschaft**
**67056 Ludwigshafen (DE)**

(72) Erfinder:
• **BIEDERMANN, Anja**
**49356 Diepholz (DE)**
• **PRETZSCH, Regina**
**32351 Stemwede-Haldem (DE)**
• **SCHÜTTE, Markus**
**49074 Osnabrück (DE)**
• **EGBERS, Gitta**
**49080 Osnabrück (DE)**
• **SCHMALKUCHE, Cord**
**82110 Germering (DE)**
• **SCHWARZ, Marc**
**82140 Olching (DE)**
• **POHL, Wolfgang**
**80797 München (DE)**
• **LEHNERT, Erich**
**82140 Olching (DE)**

(56) Entgegenhaltungen:
WO-A-98/23659     DE-A1- 4 032 148
DE-A1- 10 227 187     US-B1- 6 329 441

**Beschreibung**

Die Erfindung betrifft quellbeständige Polyurethanintegralschaumstoffe, erhältlich durch Umsetzung von Polyisocyanatprepolymeren (a) mit einer Polyolmischung (b), enthaltend ein Polyetherpolyol (b1) auf Basis eines difunktionellen Startermoleküls und einem Polyetherpolyol (b2) auf Basis eines drei bis fünfwertigen Startermoleküls, wobei die Polyole (b1) und (b2) durch Alkoxylierung mit Ethylenoxid (nachfolgend als EO bezeichnet) und Propylenoxid (nachfolgend als PO bezeichnet) hergestellt werden, einen Ethylenoxidgehalt von mehr als 50 Gew.-% aufweisen und mindestens 5 % des Ethylenoxids als EO-Endcap vorhanden sind.

Integralschaumstoffe aus Polyurethan (PUR) sind seit langem bekannt und haben eine Reihe technologisch nutzbarer Eigenschaften wie z.B. Elastizität, energieabsorbierende oder wärmeisolierende Eigenschaften bei gleichzeitig geringem Gewicht. Zu den vielseitigen Einsatzfeldern zählen u.a. Schuhsohlen, Lenkräder oder Dämpfungselemente für die Automobilindustrie. Im Bereich Arbeitssicherheitsschuhe werden standardmäßig Schuhsysteme auf Polyesterolbasis eingesetzt, die die Anforderungen nach DIN EN 344-1 erfüllen. Allerdings haben Polyesterolsysteme nur eine begrenzte Hydrolysestabilität. Systeme auf Polyetherolbasis weisen eine erheblich bessere Hydrolysestabilität auf, erfüllen jedoch nicht die Anforderungen bezüglich Quellbeständigkeit gegen Benzin.

WO 99/07761 beschreibt Polyurethanweichschaumstoffe für Schuhsohlen, die durch ein Polyetherolgemisch hergestellt worden sind, das aus einem Polyetherol mit EO-Gehalt von mehr als 25 % und EO-Endcap und einem statistischem EO/PO-Polyetherol mit EO-Gehalt von mehr als 60 % bestehen. "EO" wird hier als Kürzel für die Wiederholeinheit $CH_2$-$CH_2$-O und "PO" für $CH_2$-$CH_2$-$CH_2$-O genutzt. Die Schrift gibt keinen Hinweis auf vorteilhafte Hydrolyse- oder Quelleigenschaften, ferner sind die offenbarten Systeme nicht vorteilhaft im Hinblick auf die mechanischen Eigenschaften.

Quellbeständige Polyurethanmaterialien werden in DE-A-199 27 188 beschrieben. Die Quellbeständigkeit wird durch den Einsatz einer Mischung aus Polyesterolen und Polyetherolen, die 60 bis 85% Propylenoxid und 40 bis 15% Ethylenoxid enthalten, erreicht. Hybridsysteme aus Polyesterolen und Polyetherolen sind aus Gründen der schlechten Verarbeitbarkeit verbunden mit schlechten Gebrauchseigenschaften häufig unerwünscht.

EP-B-939 780 B1 beschreibt den Einsatz einer speziellen Polyetherolkomponente, die PO und EO im Verhältnis von 60:40 bis 85:15 enthält, zur Herstellung von kraftstoffbeständiger Sicherheitskleidung und Schuhsohlen. Die offenbarten Systeme sind jedoch nur zur Herstellung von Schuhsohlen mit Dichten über 800 g/l geeignet.

Aufgabe der vorliegenden Erfindung war es daher, Polyurethanschaumstoffe bereit zu stellen, welche

a) über einen Dichtebereich von 250 g/l bis 1200 g/l einerseits gute Quelleigenschaften gegenüber unpolaren Medien zeigen (d.h. beispielsweise geringe Volumenzunahme bei Kontakt mit unpolaren Flüssigkeiten) und die andererseits gute Hydrolyseeigenschaften aufweisen, und
b) gute mechanische Eigenschaften wie Zugfestigkeit, Weiterreißfestigkeit und Dehnung aufweisen.

Insbesondere war es Aufgabe der Erfindung, Polyurethanschaumstoffe bereit zu stellen, welche über einen Dichtebereich von 250 g/l bis 1200 g/l zur Herstellung von Schuhsohlen geeignet sind, die einerseits im Hinblick auf Quellbeständigkeit die Norm EN 344-1 Punkt 4.8.9. erfüllen und andererseits im Hinblick auf Hydrolysestabilität die Norm EN 344-1 Punkt 4.8.6 oder die Alterungsbeständigkeit nach DIN 53543, Punkt 6.2 oder die Alterungsbeständigkeit nach DIN EN ISO 2440 (Schnellalterungsprüfung) erfüllen. Bevorzugt ist die Alterungsbeständigkeit nach DIN 53543, Punkt 6.2 zu erfüllen.

Die Aufgabe konnte durch Polyurethanintegralschaumstoffe gelöst werden, die durch eine spezielle, hoch-EO-haltige Polyolkomponente hergestellt wurden.

Gegenstand der Erfindung ist somit ein Polyurethanintegralschaumstoff, erhältlich durch Umsetzung eines

a) Polyisocyanatprepolymeren mit
b) einer Polyetherpolyolmischung, enthaltend

b1) ein Polyetherpolyol, hergestellt durch Alkoxylierung eines difunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und
b2) ein Polyetherpolyol, hergestellt durch Alkoxylierung eines drei oder vierfunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und

c) Kettenverlängerungsmittel.

Bei den erfindungsgemäßen Polyurethanenintegralschaumstoffen handelt es sich im allgemeinen um Integralschaumstoffe gemäß DIN 7726. In einer bevorzugten Ausführungsform betrifft die Erfindung Integralschaumstoffe auf Basis von Polyurethanen mit einer Shore Härte im Bereich von 20 bis 90 A, bevorzugt von 30 bis 80 Shore A, gemessen nach DIN 53 505. Weiterhin weisen die erfindungsgemäßen Integralschaumstoffe bevorzugt eine Zugfestigkeiten von 2 bis 20 N/mm$^2$, bevorzugt von 2,5 bis 18 N/mm$^2$, gemessen nach DIN 53504 auf. Ferner weisen die erfindungsgemäßen Integralschaumstoffe bevorzugt eine Dehnung von 100 bis 800 %, bevorzugt von 220 bis 700, gemessen nach DIN 53504 auf. Schließlich weisen die erfindungsgemäßen Integralschaumstoffe bevorzugt eine Weiterreißfestigkeit von 2 bis 45 N/mm, bevorzugt von 4 bis 38 N/mm, gemessen nach DIN 53507, auf.

Insbesondere handelt es sich bei den erfindungsgemäßen Polyurethanen um elastomere Polyurethan-Weichintegralschaumstoffe.

Die zur Herstellung der erfindungsgemäßen Polyurethanschaumstoffe verwendeten Polyisocyanate (a) umfassen die aus dem Stand der Technik bekannten aliphatischen, cycloaliphatischen und aromatischen Isocyanate sowie beliebige Mischungen daraus. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat TDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.% des eingesetzten Isocyanates nicht überschreiten.

Die Polyisocyanate (a) können auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit nachstehend beschriebenen Verbindungen mit gegenüber Isocyanaten reaktiven Wasserstoffatomen (b) zum Prepolymer umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 24 Gew.-%, besonders bevorzugt 13 bis 23 Gew.-% beträgt.

Als Verbindungen mit gegenüber Isocyanaten reaktiven Wasserstoffatomen (b) kommen Verbindungen in Frage, die zwei oder mehr reaktive Gruppen, ausgewählt aus OH-Gruppen, SH-Gruppen, NH-Gruppen, NH$_2$-Gruppen und CH-aciden Gruppen, wie z.B. β-Diketo-Gruppen, im Molekül tragen. Je nach Wahl der Komponente (b) umfasst im Rahmen dieser Erfindung der Begriff Polyurethane allgemein Polyisocyanat-Polyadditionsprodukte, beispielsweise auch Polyharnstoffe.

Als Komponente (b) wird eine Polyetherolmischung verwendet. Die eingesetzten Polyetherpolyole werden im allgemeinen nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 4 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden, ausgewählt aus Propylenoxid (PO) und Ethylenoxid (EO), hergestellt.

Als Polyetherole (b) können weiterhin sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden durch Anlagerung von Ethylenoxid und/oder Propylenoxid und Mischungen daraus, an mindestens difunktionelle Alkohole in Gegenwart von sogenannten Doppelmetallcyanidkatalysatoren hergestellt.

Die Alkylenoxide können einzeln, alternierend nacheinander oder als Mischungen verwendet werden. Der Einsatz eines EO/PO-Gemisches führt zu einem Polyetherpolyol mit statistischer PO/EO-Einheiten-Verteilung. Es ist möglich, zunächst ein PO/EO-Gemisch einzusetzen und dann vor Abbruch der Polymerisation nur noch PO oder EO zu verwenden, dann erhält man ein Polyetherpolyol mit PO- bzw. EO-Endcap.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin und Trialkanolamine wie z.B. Triethanolamin und Ammoniak.

Weiterhin eingesetzt werden zwei-, dreiwertige oder vierwertige Alkohole, wie Ethandiol, Propandiol-1,2 und -1,3, Diethylenglykol, Dipropylenglykol, Butandiol-1,4, Hexandiol-1,6, Glycerin und/oder Pentaerythrit.

Bei den Bestandteilen (b1) und (b2) handelt es sich um Polyetherpolyole, die durch Alkoxylierung eines zweiwertigen bzw. drei- oder vierwertigen Startermoleküls mit Ethylenoxid und Propylenoxid hergestellt wurden. Es ist erfindungswesentlich, dass die als Bestandteile (b1) und (b2) eine Ethylenoxidgehalt von mehr als 50 Gew.-%, bezogen auf 100 Gewichtsprozent Alkylenoxid, besitzen. In einer bevorzugten Ausführungsform weisen die Polyetherpolyole (b1) und (b2) einen Ethylenoxidanteil von 60 bis 85 Gew.-%, besonders bevorzugt von 70 bis 80 Gew.-% auf.

Ferner ist es erfindungswesentlich, dass bei den Bestandteilen (b1) und (b2) mindestens 5 % des angelagerten Ethylenoxids als EO-Endcap vorhanden sind. In einer bevorzugten Ausführungsform sind 8 bis 30 %, mehr bevorzugt 9 bis 25 %, besonders bevorzugt 10 bis 22 % des Ethylenoxids, bezogen auf 100 Gewichtsprozent Alkylenoxid, als EO-Endcap vorhanden.

Ein wesentlicher Punkt der Erfindung ist weiterhin, dass das Polyetherpolyol (b1) durch Alkoxylierung eines zweiwertigen Startermoleküls oder eines Gemisches aus mehreren zweiwertigen Startermolekülen hergestellt wird. Bevorzugt wird hier Diethylenglykol oder Propylenglycol, oder Dipropylenglycol verwendet.

Ein wesentlicher Punkt der Erfindung ist ferner, dass das Polyetherpolyol (b1) durch Alkoxylierung eines drei- oder vierwertigen Startermoleküls oder eines Gemisches aus mehreren drei- oder vierwertigen Startermolekülen hergestellt wird. Bevorzugt werden dreiwertige Startermoleküle verwendet, beispielsweise wird hier Glycerin oder Trimethylolpropan eingesetzt.

Die Mengen der Polyetherpolyole (b1) und (b2) werden bevorzugt so abgestimmt, dass das resultierende Polyetherpolyolgemisch (b) eine tatsächliche Funktionalität von 2,01 bis 2,8, bevorzugt von 2,05 bis 2,6, besonders bevorzugt 2,1 bis 2,6 aufweist. Unter "tatsächlicher" Funktionalität wird hier die Funktionalität verstanden, die sich durch Messen der tatsächlichen OH-Zahl, Messen des tatsächlichen (zahlenmittleren) Molekulargewichts und anschließender Rückberechnung nach der Formel:

$$\text{Funktionalität} = \text{Molekulargewicht} \times 56100 \,/\, \text{OH-Zahl}$$

ergibt.

Im Gegensatz dazu ist die häufig in der Literatur angegebene theoretische Funktionalität zu unterscheiden, die sich aus der Funktionalität des zu alkoxylierenden Startermoleküls ergibt.

Im allgemeinen weisen die Poiyetherpoiyoie (b1) und (b2) ein zahlenmittleres ivioiekulargewicht von 400 bis 8000 g/mol, bevorzugt von 800 bis 6000 g/mol, besonders bevorzugt von 2000 bis 4000 g/l auf.

Als Komponente (c) werden Kettenverlängerungsmittel eingesetzt. Geeignete Kettenverlängerungsmittel sind im Stand der Technik bekannt. Bevorzugt werden 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Glycerin oder Trimethylolpropan. Bevorzugt wird Monoethylenglykol verwendet.

Das Kettenverlängerungsmittel wird üblicherweise in einer Menge von 5 bis

20 Gew.-%, bevorzugt von 7 bis 16 Gew.-%, besonders bevorzugt von 9 bis
15 Gew.-%, bezogen auf das Gesamtgewicht der Komponenten (b) und (c) verwendet.

In einer bevorzugten Ausführungsform werden die Bestandteile

(b1) in einer Menge von 15 bis 80 Gew.-%, vorzugsweise 20 bis 70 Gew.-%,
(b2) in einer Menge von 1 bis 30 Gew.-%, vorzugsweise 1,5 bis 25 Gew.-% und
(c) in einer Menge von 5 bis 20 Gew.-%, vorzugsweise 9 bis 16 Gew.-%, bezogen auf das Gesamtgewicht der Komponenten (b) und (c), eingesetzt.

Der Umsetzung von Polyisocyanatprepolymeren (a) und der Polyolmischung (b) können gegebenenfalls noch weitere Verbindungen mit gegenüber Isocyanaten reaktiven Wasserstoffatomen zugesetzt werden. Beispiele hierfür sind überwiegend PO-haltige Polyetherole oder Polymerpolyole. Es ist bevorzugt, dass der Umsetzung im wesentlichen keine Polyesterpolyole zugeben werden.

Die Umsetzung der Komponenten (a) und (b) erfolgt gegebenenfalls in Gegenwart von Treibmitteln. Als Treibmittel können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Die Menge der eingesetzten Treibmittel richtet sich nach der angestrebten Dichte der Schaumstoffe. Im allgemeinen wird das Treibmittel so eingesetzt, dass Formteildichten von 250 g/l bis 1200 g/l, bevorzugt von 250 bis 600 g/l oder von 800 bis 1200 g/l (je nach Anwendung, siehe nachstehende Ausführungen) erreicht werden.

Als Katalysatoren für die Herstellung der erfindungsgemäßen Polyurethanschaumstoffe werden die üblichen und bekannten Polyurethanbildungskatalysatoren eingesetzt, beispielsweise organische Zinnverbindungen, wie Zinndiacetat, Zinndioctoat, Dibutylzinndilaurat, und/oder stark basische Amine wie Diazabicyclooctan, Triethylamin, oder vorzugsweise Triethylendiamin oder Bis(N,N-Dimethylaminoethyl)ether. Die Katalysatoren werden vorzugsweise in einer Menge von 0,01 bis 10 Gew.-%, vorzugsweise 0,02 bis 5 Gew.-%, eingesetzt.

Die Umsetzung der Komponenten a) und b) erfolgt gegebenenfalls in Anwesenheit von (e) Hilfs- und/oder Zusatzstoffen, wie z.B. Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Bevorzugt enthalten die erfindungsgemäßen Polyurethane Schichtsilikate. Durch den Einsatz dieser Schichtsilikate, die bevorzugt delaminiert, auch als exfoliert bezeichnet, vorliegen, kann die Quellbeständigkeit der bevorzugt mikrozelligen Polyurethanelastomeren zusätzlich verbessert werden. Als Schichtsilikate können die aus dem Stand der Technik bekannten Silikatstrukturen mit zweidimensionalen Schichten aus $SiO_4$-Tetraedern eingesetzt werden (im Stand der Technik auch als Blatt- oder Phyllosilicate bekannt). Beispiele für geeignete Schichtsilikate sind Bentonit, Talk, Pyrophyllit, Glimmer, Serpentin, Kaolinit oder Gemische davon. Bevorzugt verwendet wird Bentonit. Die erfindungsgemäßen Schichtsilikate liegen bevorzugt modifiziert vor. Die Modifizierung besteht darin, dass zwischen den Schichten nach aus dem Stand der Technik bekannten Methoden Verbindungen (ii) eingelagert, d.h. interkaliert sind. Die Einlagerung erfolgt durch Austausch der im Schichtgitter der Silikate enthaltenen Kationen durch diese allgemein bekannten Verbindungen. In einer bevorzugten Ausführungsform führt die Einlagerung der Verbindungen zu modifizierten Schichtsilikaten mit einem Schichtabstand von 1 bis 2 nm. Bevorzugt handelt es sich bei der Verbindung (ii) um eine quartäre Aminoverbindung, besonders bevorzugt sind Stearylbenzyldimethylammonium mit Gegenanion, insbesondere Stearylbenzyldimethylammoniumchlorid und/oder Stearylbenzyldimethylammoniumsulphat, insbesondere bevorzugt Stearylbenzyldimethylammoniumchlorid. Die Schichtsilikate sind kommerziell bei Südchemie, Southern Clay, Nanocor und LY-TEC, Laviosa Chimica unter anderem unter den Marken Nanofil® 2, Nanofil® 32, Nanofil® 9, Nanofil® 919, Cloisite® 10A, Cloisite® 30B, SCPX 1138, SCPX 439, Dellite® 43 B erhältlich. Im allgemeinen werden die erfindungsgemäßen bevorzugt modifizierten Schichtsilikate (i), enthaltend bevorzugt (ii), in einer Menge von 0,1 bis 20 Gew.-%, bevorzugt von 0,5 bis 15 Gew.- %, besonders bevorzugt von 0,5 bis 10 Gew.-%, insbesondere von 0,8 bis 4 Gew.-%, bezogen auf das Gesamtgewicht der Polyolkomponente eingesetzt. Durch Umsetzung der erfindungsgemäßen modifizierten Schichtsilikate mit der Polyisocyanatkomponente werden diese exfoliert und als exfolierte Schichtsilikate in die Polyurethanmatrix eingebaut. Unter "exfoliert" wird im allgemeinen verstanden, dass der Schichtabstand der Silikatschichten derart groß ist oder dass die Schichten derart unregelmäßig angeordnet sind, so dass mit den üblichen Meßmethoden kein Schichtabstand mehr bestimmt werden kann. Erfindungsgemäß besonders bevorzugt sind somit die erfindungsgemäßen Polyurethanintegralschaumstoff, die Schichtsilikate, bevorzugt modifizierte Schichtsilikate enthalten. Besonders bevorzugt liegen die Schichtsilikate exfoliert vor. Dabei können die Schichtsilikate bei der Herstellung der Integralschaumstoffe bevorzugt der Polyolkomponente zugegeben werden. Die Exfolierung der Schichtsilikate kann bereits in der Polykomponente vor der Umsetzung mit den Isocyanaten erfolgen oder aber während der Umsetzung der Polyolkomponente enthaltend die Schichtsilikate mit den Isocyanaten.

Im allgemeinen wird die Komponente (a) als Isocyanatkomponente und die Komponente (b), im Gemisch mit der Komponenten (c) und gegebenenfalls Treibmitteln und Zusatzstoffen als Polyolkomponente bezeichnet.

Gegenstand der Erfindung ist ferner ein Verfahren zur Herstellung von Polyurethanintegralschaumstoffen durch Umsetzung von

  a) Polyisocyanatprepolymeren mit
  b) einer Polyolmischung, enthaltend die Bestandteile

  b1) ein Polyetherpolyol, hergestellt durch Alkoxylierung eines difunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und
  b2) ein Polyetherpolyol, hergestellt durch Alkoxylierung eines drei oder vierfunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und

  c) Kettenverlängerungsmittel.

Die oben beschriebenen bevorzugten Ausführungsformen für den erfindungsgemäßen Polyurethanintegralschaumstoff beziehen sich ebenso auf das erfindungsgemäße Verfahren.

Das erfindungsgemäße Verfahren wird bevorzugt in Formen unter Verdichtung durchgeführt. Die Formen bestehen bevorzugt aus Metall, z.B. Stahl oder Alumium, oder auch aus Kunststoff, z.B. Epoxyharz. Die Ausgangskomponenten werden bei Temperaturen von 15 bis 90°C, vorzugsweise bei 20 bis 35°C gemischt, und gegebenenfalls unter erhöhtem Druck, in das (bevorzugt geschlossene) Formwerkzeug eingebracht. Die Vermischung kann beim Einbringen durch im Stand der Technik bekannte Hoch- oder Niederdruckmischköpfe erfolgen. Die Temperatur der Form beträgt im allgemeinen zwischen 20 und 90°C, bevorzugt zwischen 30 und 60°C.

Die Menge des in die Form eingebrachten Reaktionsgemisches wird so bemessen, das die erhaltenen Formkörper eine Dichte von 250 bis 600 g/l oder von 800 bis 1200 g/l, bevorzugt von 400 bis 600 g/l oder von 820 bis 1050 g/l, aufweisen. Die Verdichtungsgrade der resultierenden Integralschaumstoffe, d.h. der Formkörper mit verdichteter Randzone und zelligem Kern, liegen zwischen 1,1 und 8,5, bevorzugt zwischen 1,5 und 7, besonders bevorzugt zwischen 2 und 6.

Zur Herstellung von Polyurethanschaumstoffen werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

Die erfindungsgemäßen Polyurethanintegralschaumstoffe werden für Lenkräder, Sicherheitsbekleidung und bevorzugt für Schuhsohlen, insbesondere Außenschuhsohlen und Zwischenschuhsohlen, verwendet.

Neben den erfindungsgemäßen Polyurethanschaumstoffen ist somit eine Außenschuhsohle mit einer Dichte von 800 bis 1200 g/l, bevorzugt von 820 bis 1050 g/l, enthaltend die erfindungsgemäßen Polyurethanintegralschaumstoffe Gegenstand der Erfindung. Unter Dichte des Polyurethanschaumstoffs ist im Rahmen dieser Erfindung die gemittelte Dichte über den gesamten resultierenden Schaumstoff zu verstehen, d.h. bei Integralschaumstoffen bezieht sich diese Angabe auf die mittlere Dichte des gesamten Schaumstoffs inklusive Kern und Außenschicht. Die Integralschaumstoffe werden bevorzugt wie vorstehend beschrieben in einer Form hergestellt, daher spricht man bei der Dichte des resultierenden Schaumstoffs auch von Formteildichte.

Weiterhin ist eine Zwischenschuhsohle mit einer Dichte von 250 bis 600 g/l, bevorzugt von 400 bis 600 g/l, enthaltend die erfindungsgemäßen Polyurethanintegralschaumstoffe Gegenstand der Erfindung.

Die erfindungsgemäßen Schuhsohlen weisen eine geringe Quellung in polaren Flüssigkeiten, beispielsweise in Benzin oder Isooktan auf. Deshalb können sie vorteilhaft zur Herstellung von kraftstoffbeständigen bzw. in Kraftstoff quellbeständigen Schuhsohlen verwendet werden.

Gegenstand der Erfindung ist somit die Verwendung einer erfindungsgemäßen Außenschuhsohle oder Zwischenschuhsohle zur Herstellung von quellbeständigen Schuhsohlen, welche eine Quellung von weniger als 12 % gemäß EN 344-1 Punkt 4.8.9. zeigen und somit diese Norm erfüllen.

Die erfindungsgemäßen Schuhsohlen weisen weiterhin ein gutes Hydrolyseverhalten auf. Deshalb können sie vorteilhaft zur Herstellung von hydrolysestabilen und quellbeständigen Schuhsohlen verwendet werden.

Gegenstand der Erfindung ist somit die Verwendung einer erfindungsgemäßen Außenschuhsohle oder Zwischenschuhsohle zur Herstellung von quellbeständigen Schuhsohlen, welche die Norm EN 344-1 in den Punkten 4.8.9. und 4.8.6 erfüllt.

Bevorzugt werden die erfindungsgemäßen Außenschuhsohle oder Zwischenschuhsohle zur Herstellung von quellbeständigen Schuhsohlen verwendet, welche die Norm EN 344-1 im Punkt 4.8.9. erfüllen und die Alterungsbeständigkeit nach DIN 53 543, Punkt 6.2 und/oder DIN EN ISO 2440 (Schnellalterungsprüfung) bestehen.

Die Alterungsbeständigkeit nach DIN 53 543, Punkt 6.2 und DIN EN ISO 2440 (Schnellalterungsprüfung) wird wie folgt durchgeführt:

Mit den erfindungsgemäßen Polyurethanschuhsohlensystemen werden Prüfkörper in den Maßen 200 x 200 x 10 ± 0,5 mm geschäumt. Vor Beginn der Alterungsversuche werden die Ausgangswerte der Zugfestigkeit und Dehnung nach DIN 53 504 und der Weiterreißfestigkeit nach DIN 53 507 bestimmt. Die Probekörper werden danach einem Alterungstest bei 70°C unter Wasser unterzogen. Die Probennahme erfolgt nach 7 und 14 Tagen. Die Restzugfestigkeit der Proben muss 100 % des Ausgangswertes betragen.

Beispiele

Verwendete Einsatzstoffe:

| Polyol 1: | Polyether-Polyol, OHZ=42, nominale Funktionalität f=3, Verhältnis von EO/PO=75/25, EO-cap von 10 Gew.-% |
|---|---|
| Polyol 2: | Polyether-Polyol, OHZ=51, nominale Funktionalität f=2, Verhältnis von EO/PO =71/29, EO-cap von 15 |

|  | Gew.-% |
|---|---|
| Polyol 3: | Polyether-Polyol, OHZ=29, nominale Funktionalität = 2, Verhältnis von PO/EO = 80/20, EO-cap |
| Polyol 4: | Polyether-Polyol, OHZ=35, nominale Funktionalität = 3, Verhältnis von PO/EO = 85/15, EO-cap |
| Polyol 5: | Polyether-Polyol, OHZ=27, nominale Funktionalität = 2,49, Verhältnis von PO/EO = 80/20, EO-cap |
| KV 1: | Monoethylenglykol |
| KV 2: | 1,4-Butandiol |
| Stabilisator: | Dabco DC 193® (Air Products) |
| K1: | Zinn-Katalysator, |
| K2: | Amin-Katalysator, |
| Tixogel: | sphärische $SiO_2$ Nanopartikel der Firma Südchemie |
| Cloisite 30B: | Nano-Schichtsilikat der Firma Südchemie |

ISO 500®, ISO 137/28®, ISO MP102®: Isocyanat-Prepolymere der Firma Elastogran auf Basis von 4,4'-MDI, einem Polyether-Polyol

NCO-Gehalt=18,0% für ISO 137/28®, 22,9% für MP102® sowie 20,4 % für ISO 500®

Herstellung der Integralschaumstoffe:

Die A- und B-Komponenten wurden in den in den Beispielen beschriebenen Mischungsverhältnissen (siehe Tabelle 1) bei 23°C intensiv vermischt und die Mischung in ein auf 50°C temperiertes, plattenförmiges Formwerkzeug aus Aluminium mit den Abmessungen 20 x 20 x 1 cm in einer solchen Menge eingebracht, dass nach dem Aufschäumen und Aushärten im geschlossenen Formwerkzeug eine Integralschaumstoffplatte resultierte.

Tabelle 1: Übersicht Systeme

| Polyolmischung | V1 | V2 | V3 | V4 | 1a | 1b | 1c | 2 | 3 | 4 | 5 |
|---|---|---|---|---|---|---|---|---|---|---|---|
| Polyol1 | | | | | 22,3 | 23,0 | 14,0 | 17,4 | 1,7 | 23,0 | 23,0 |
| Polyol 2 | | | | | 60,3 | 42,6 | 68,8 | 21,5 | 84,5 | 42,6 | 42,6 |
| Polyol 3 | 26,6 | | 26,6 | 26,6 | | | | | | | |
| Polyol 4 | 13,3 | 46,2 | 13,3 | 13,3 | | | | | | | |
| Polyol 5 | 42,3 | 45,5 | 42,3 | 42,3 | | 18,7 | | 50,2 | | 18,7 | 18,7 |
| Stabilisator | 0,3 | 0,15 | 0,3 | 0,3 | 0,3 | 0,3 | 0,3 | 0,3 | 0,25 | 0,3 | 0,3 |
| KV 1 | 1,4 | 6,3 | 1,4 | 1,4 | 13,7 | 11,8 | 14 | 9,17 | 13,5 | 11,8 | 11,8 |
| KV 2 | 12,7 | | 12,7 | 12,7 | 1,0 | 1,0 | 1 | | | 1,0 | 1,0 |
| K 2 | 2,4 | 1,3 | 2,4 | 2,4 | 2,0 | 2,0 | 2,0 | 1,4 | 1,3 | 2,0 | 2,0 |
| K 1 | 0,05 | 0,03 | 0,05 | 0,05 | 0,05 | 0,05 | 0,05 | 0,05 | 0,04 | 0,05 | 0,05 |
| Wasser | 0,4 | 0,4 | 0,4 | 0,4 | 0,4 | 0,4 | 0,4 | 0,2 | 0,2 | 0,4 | 0,4 |
| Tixogel | | | 10 | | | | | | | | |
| Cloisite 30B | | | | 10 | | | | | | | 2 |
| Isocyanat-Komponente- | ISO 137/17® | MP102® | ISO 137/17® | ISO 137/17® | ISO 137/28® | ISO 137/28® | ISO 137/28® | MP102® | ISO 500® | ISO 137/28® | ISO 137/28® |
| MVA:B=100* x | 124 | 74 | 124 | 124 | 140 | 129 | 98 | 74 | 113 | 129 | 129 |

Verarbeitung:

Bei allen Versuchen wurden Schaumstoffe mit frei geschäumten Dichten von 260 bis 300 g/l hergestellt. Bei doppelter Verdichtung ergeben sich damit Formteildichten von 550 bis 600g/l. Alle Versuche wiesen vergleichbare Startzeiten, Steigzeiten und Knickzeiten auf. Die Dimensionsstabilität nach Entformung ist bei allen Versuchen vergleichbar. Wichtige mechanische Kenngrößen wie Zugfestigkeit, Dehnung oder Dauerbiege-Eigenschaften sind ebenfalls vergleichbar.

Tabelle 2 gibt eine Übersicht über die Verarbeitungseigenschaften und mechanischen Eigenschaften der Systeme.

Tabelle 2: Übersicht Verarbeitungseigenschaften und mechanische Eigenschaften

| Versuch | V1 | V2 | V3 | V4 | 1 a | 1 b | 1 c | 2 | 3 | 4 | 5 |
|---|---|---|---|---|---|---|---|---|---|---|---|
| **Dauerbiege-Test*** | + | + | + | + | + | + | + | + | + | + | + |
| **Quellung** | - | - | - | - | + | + | + | + | + | + | + |
| **Hydrolysestabilität** | + | + | + | + | + | + | + | + | + | + | + |
| **\* + = Risserweiterung nach 100 kZyklen < 2mm** | | | | | | | | | | | |

Tabelle 3 beschreibt die Wirkung von Nanomaterialien auf das Quellverhalten ausgewählter Systeme.

Tabelle 3: Quellung bei Einsatz von Nanomaterialien

| Teile | V3 (Tixogel in V1) | V4 (Cloisite 30B in V1) | 5 (Cloisite 30B in 1b) | 4 (Tixogel in 1b) |
|---|---|---|---|---|
| 0 | 18,6 | 18,6 | 7,6 | 7,6 |
| 0,5 | | | 6,5 | 8,4 |
| 0,7 | | | 6,4 | |
| 2 | | | 6,8 | 8,3 |
| 10 | 18,7 | 17,8 | | |

Die Bestimmung der Messwerte erfolgt nach folgenden Vorschriften: Dauerbiege-Test nach DIN 53 543, Quellung nach DIN EN 344-1, Hydrolysestabilität nach DIN 53 543, Punkt 6.2.

**Patentansprüche**

1. Polyurethanintegralschaumstoff, erhältlich durch Umsetzung eines

    a) Polyisocyanatprepolymeren mit
    b) einer Polyetherpolyolmischung, enthaltend die Bestandteile

        b1) ein Polyetherpolyol, hergestellt durch Alkoxylierung eines difunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und
        b2) ein Polyetherpolyol, hergestellt durch Alkoxylierung eines drei oder vierfunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und

    c) Kettenverlängerungsmittel.

2. Polyurethanintegralschäumstoff nach Anspruch 1, **dadurch gekennzeichnet, dass** die Bestandteile

    (b1) in einer Menge von 15 bis 80 Gew.-%,

(b2) in einer Menge von 1 bis 30 Gew.-% und

(c) in einer Menge von 5 bis 20 Gew.-%,

bezogen auf das Gesamtgewicht der Komponenten (b) und (c), eingesetzt werden.

3. Polyurethanintegralschaumstoff nach Anspruch 1 oder 2, **dadurch gekennzeichnet, dass** die Bestandteile (b1) und (b2) einen Ethylenoxidanteil von 60 bis 85 Gew.-% aufweisen.

4. Polyurethanintegralschaumstoff nach einem der Ansprüche 1 bis 3, **dadurch gekennzeichnet, dass** es sich um Integralweichschaumstoffe auf Basis von Polyurethanen mit einer Shore Härte im Bereich von 20-90 A, einer Zugfestigkeiten bis 20 N/mm$^2$, einer Dehnung bis 800 % und Weiterreißfestigkeit bis 45 N/mm handelt.

5. Polyurethanintegralschaumstoff nach einem der Ansprüche 1 bis 4, **dadurch gekennzeichnet, dass** der Polyurethanintegralschaumstoff Schichtsilikate enthält.

6. Polyurethanintegralschaumstoff nach Anspruch 5, **dadurch gekennzeichnet, dass** die Schichtsilikate exfoliert sind.

7. Verfahren zur Herstellung von Polyurethanintegralschaumstoffen durch Umsetzung von

a) Polyisocyanatprepolymeren mit
b) einer Polyolmischung, enthaltend die Bestandteile

b1) ein Polyetherpolyol, hergestellt durch Alkoxylierung eines difunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und
b2) ein Polyetherpolyol, hergestellt durch Alkoxylierung eines drei oder vierfunktionellen Startermoleküls mit Ethylenoxid und Propylenoxid, wobei der Ethylenoxidanteil mehr als 50 Gew.-%, bezogen auf 100 Gewichtsprozent von Alkylenoxiden und Startermolekül, beträgt und wobei mindestens 5 % des Ethylenoxids als EO-Endcap vorhanden sind, und

c) Kettenverlängerungsmittel.

8. Außenschuhsohle mit einer Dichte von 800 bis 1200 g/l, enthaltend Polyurethanintegralschaumstoffe gemäß einem der Ansprüche 1 bis 6.

9. Zwischenschuhsohle mit einer Dichte von 250 bis 600 g/l, enthaltend Polyurethanintegralschaumstoffe gemäß einem der Ansprüche 1 bis 6.

10. Verwendung einer Außenschuhsohle gemäß Anspruch 8 oder einer Zwischenschuhsohle gemäß Anspruch 9 zur Herstellung quellbeständigen Schuhsohlen, welche eine Quellung von weniger als 12 % gemäß EN 344-1 Punkt 4.8.9. zeigen.

11. Verwendung einer Außenschuhsohle gemäß Anspruch 8 oder einer Zwischenschuhsohle gemäß Anspruch 9 zur Herstellung quellbeständigen und hydrolysestabilen Schuhsohlen, welche die Norm EN 344-1 Punkten 4.8.9. und 4.8.6 erfüllt.

**Claims**

1. An integral polyurethane foam obtainable by reacting

a) a polyisocyanate prepolymer with
b) a polyether polyol mixture comprising the constituents

b1) a polyether polyol prepared by alkoxylation of a bifunctional starter molecule by means of ethylene oxide and propylene oxide, with the ethylene oxide content being more than 50% by weight, based on 100 percent by weight of alkylene oxides and starter molecule, and at least 5% of the ethylene oxide being present as an EO end cap, and

b2) a polyether polyol prepared by alkoxylation of a trifunctional or tetrafunctional starter molecule by means of ethylene oxide and propylene oxide, with the ethylene oxide content being more than 50% by weight, based on 100 percent by weight of alkylene oxides and starter molecule, and at least 5% of the ethylene oxide being present as an EO end cap, and

c) chain extenders.

2. The integral polyurethane foam according to claim 1, wherein the constituents are used in the following amounts:

(b1) in an amount of from 15 to 80% by weight,
(b2) in an amount of from 1 to 30% by weight and
(c) in an amount of from 5 to 20% by weight,

based on the total weight of the components (b) and (c).

3. The integral polyurethane foam according to claim 1 or 2, wherein the constituents (b1) and (b2) have an ethylene oxide content of from 60 to 85% by weight.

4. The integral polyurethane foam according to any of claims 1 to 3 which is an integral flexible foam based on polyurethanes and having a Shore hardness in the range 20-90 A, a tensile strength of up to 20 N/mm$^2$, an elongation of up to 800% and a tear propagation resistance up to 45 N/mm.

5. The integral polyurethane foam according to any of claims 1 to 4, wherein the integral polyurethane foam comprises sheet silicates.

6. The integral polyurethane foam according to claim 5, wherein the sheet silicates are exfoliated.

7. A process for producing integral polyurethane foams by reacting

a) a polyisocyanate prepolymer with
b) a polyol mixture comprising the constituents

b1) a polyether polyol prepared by alkoxylation of a bifunctional starter molecule by means of ethylene oxide and propylene oxide, with the ethylene oxide content being more than 50% by weight, based on 100 percent by weight of alkylene oxides and starter molecule, and at least 5% of the ethylene oxide being present as an EO end cap, and

b2) a polyether polyol prepared by alkoxylation of a trifunctional or tetrafunctional starter molecule by means of ethylene oxide and propylene oxide, with the ethylene oxide content being more than 50% by weight, based on 100 percent by weight of alkylene oxides and starter molecule, and at least 5% of the ethylene oxide being present as an EO end cap, and

c) chain extenders.

8. An outer shoe sole having a density of from 800 to 1200 g/l and comprising an integral polyurethane foam according to any of claims 1 to 6.

9. A middle shoe sole having a density of from 250 to 600 g/l and comprising an integral polyurethane foam according to any of claims 1 to 6.

10. The use of an outer shoe sole according to claim 8 or a middle shoe sole according to claim 9 for producing swelling-resistant shoe soles which display swelling of less than 12% in accordance with EN 344-1 clause 4.8.9.

11. The use of an outer shoe sole according to claim 8 or a middle shoe sole according to claim 9 for producing swelling-resistant and hydrolysis-stable shoe soles which conform to the standard EN 344-1 clauses 4.8.9. and 4.8.6.

**Revendications**

1.  Mousse structurée de polyuréthanne, pouvant être obtenue par réaction d'un :

    a) prépolymère de polyisocyanate avec
    b) un mélange de polyols de polyéther, contenant les éléments :

    b1) un polyol de polyéther, préparé par alcoxylation d'une molécule amorce difonctionnelle avec de l'oxyde d'éthylène et de l'oxyde de propylène, la part en oxyde d'éthylène étant supérieure à 50 % en poids, par rapport à 100 % en poids d'oxydes d'alkylène et de molécule amorce, et au moins 5 % de l'oxyde d'éthylène étant présents en tant que coiffe d'oxyde d'éthylène, et
    b2) un polyol de polyéther, préparé par alcoxylation d'une molécule amorce trifonctionnelle ou quadrifonctionnelle avec de l'oxyde d'éthylène et de l'oxyde de propylène, la part en oxyde d'éthylène étant supérieure à 50 % en poids, par rapport à 100 % en poids d'oxydes d'alkylène et de molécule amorce, et au moins 5 % de l'oxyde d'éthylène étant présents en tant que coiffe d'oxyde d'éthylène, et

    c) un agent d'allongement de chaîne.

2.  Mousse structurée de polyuréthanne selon la revendication 1, **caractérisée en ce que** les éléments sont utilisés :

    (b1) en une quantité de 15 à 80 % en poids,
    (b2) en une quantité de 1 à 30 % en poids et
    (c) en une quantité de 5 à 20 %,

    par rapport au poids total des composants (b) et (c).

3.  Mousse structurée de polyuréthanne selon la revendication 1 ou 2, **caractérisée en ce que** les éléments (b1) et (b2) présentent une part en oxyde d'éthylène de 60 à 85 % en poids.

4.  Mousse structurée de polyuréthanne selon l'une quelconque des revendications 1 à 3, **caractérisée en ce qu'**il s'agit de mousse souple structurée à base de polyuréthannes ayant une dureté Shore dans la plage de 20 à 90 A, une résistance à la rupture par traction de 20 N/mm$^2$, un allongement de 800 % et une résistance à la déchirure allant jusqu'à 45 N/mm.

5.  Mousse structurée de polyuréthanne selon l'une quelconque des revendications 1 à 4, **caractérisée en ce que** la mousse structurée de polyuréthanne contient des silicates lamellaires.

6.  Mousse structurée de polyuréthanne selon la revendication 5, **caractérisée en ce que** les silicates lamellaires sont exfoliés.

7.  Procédé de préparation de mousses structurées de polyuréthanne par réaction de :

    a) prépolymère de polyisocyanate avec
    b) un mélange de polyols, contenant les éléments :

    b1) un polyol de polyéther, préparé par alcoxylation d'une molécule amorce difonctionnelle avec de l'oxyde d'éthylène et de l'oxyde de propylène, la part en oxyde d'éthylène étant supérieure à 50% en poids, par rapport à 100 % en poids d'oxydes d'alkylène et de molécule amorce, et au moins 5 % de l'oxyde d'éthylène étant présents en tant que coiffe d'oxyde d'éthylène, et
    b2) un polyol de polyéther, préparé par alcoxylation d'une molécule amorce trifonctionnelle ou quadrifonctionnelle avec de l'oxyde d'éthylène et de l'oxyde de propylène, la part en oxyde d'éthylène étant supérieure à 50 % en poids, par rapport à 100 % en poids d'oxydes d'alkylène et de molécule amorce, et au moins 5 % de l'oxyde d'éthylène étant présents en tant que coiffe d'oxyde d'éthylène, et

    c) un agent d'allongement de chaîne.

8.  Semelle externe de chaussure ayant une densité de 800 à 1200 g/l, contenant des mousses structurées de polyuréthanne selon l'une quelconque des revendications 1 à 6.

**9.** Semelle intermédiaire de chaussure ayant une densité de 250 à 600 g/l, contenant des mousses structurées de polyuréthanne selon l'une quelconque des revendications 1 à 6.

**10.** Utilisation d'une semelle externe de chaussure selon la revendication 8 ou d'une semelle intermédiaire de chaussure selon la revendication 9 pour la fabrication de semelles de chaussure résistantes au gonflement, qui montrent un gonflement inférieur à 12 % selon la norme EN 344-1 point 4.8.9.

**11.** Utilisation d'une semelle externe de chaussure selon la revendication 8 ou d'une semelle intermédiaire de chaussure selon la revendication 9 pour la fabrication de semelles de chaussure résistantes au gonflement et stables vis-à-vis de l'hydrolyse, satisfaisant à la norme EN 344-1 points 4.8.9. et 4.8.6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9907761 A
- DE 19927188 A

- EP 939780 B1